# EUROPÄISCHE PATENTSCHRIFT

(11) **EP 1 590 576 B1**
(45) Veröffentlichungstag und Bekanntmachung des Hinweises auf die Patenterteilung: **19.09.2007**
(21) Anmeldenummer: 04704986.1
(22) Anmeldetag: 24.01.2004
(51) Int. Cl.: F16D 48/06

(54) **ANTRIEBSSTRANG UND VERFAHREN ZUR STEUERUNG EINES ANTRIEBSSTRANGS**
DRIVE TRAIN AND METHOD FOR CONTROLLING A DRIVE TRAIN
ENSEMBLE TRANSMISSION ET PROCEDE DE COMMANDE D'UN ENSEMBLE TRANSMISSION

(30) Priorität: 27.01.2003 DE 10302995
(43) Veröffentlichungstag der Anmeldung: 02.11.2005
(73) Patentinhaber: LuK Lamellen und Kupplungsbau Beteiligungs KG, 77815 Bühl (DE)
(72) Erfinder: KÜPPER, Klaus, 77815 Bühl (DE)
(86) Internationale Anmeldenummer: PCT/DE2004/000108
(87) Internationale Veröffentlichungsnummer: WO 2004/067983

(56) Entgegenhaltungen:
- DE-A- 10 012 122
- DE-A- 10 065 589

## Beschreibung

Die Erfindung betrifft ein Verfahren zur Steuerung eines Antriebsstrangs eines Kraftfahrzeugs, ein Verfahren zur Steuerung einer Kupplungseinrichtung sowie einen Antriebsstrang für ein Kraftfahrzeug.

Antriebsstränge für Kraftfahrzeuge sowie Verfahren zu deren Steuerung sind bereits bekannt. Ferner sind Verfahren zur Steuerung einer Kupplungseinrichtung bekannt. Die DE 100 65 589 A1 offenbart einen Anfahrprozess, bei dem ein Spiel im Antriebsstrang vor dem Schließen der Kupplungseinrichtung kompensiert wird.

Der Erfindung liegt die Aufgabe zugrunde, ein Verfahren zur Steuerung eines Antriebsstrangs eines Kraftfahrzeugs sowie einen Antriebsstrang für ein Kraftfahrzeug zu schaffen, welches bzw. welcher eine hohe Betriebssicherheit und/oder einen guten Fahrkomfort ermöglicht, wenn dieser Antriebsstrang in einem Kraftfahrzeug eingesetzt wird.

Die Aufgabe wird gelöst durch ein Verfahren zur Steuerung eines Antriebsstrangs eines Kraftfahrzeugs gemäß Anspruch 1. Ein Antriebsstrang ist Gegenstand des Anspruchs 14.

Erfindungsgemäß ist ein Verfahren zur Steuerung eines Antriebsstranges eines Kraftfahrzeugs vorgesehen. Dieser zu steuernde Antriebsstrang weist eine Brennkraftmaschine auf oder kann mit einer Brennkraftmaschine gekoppelt werden. Die Brennkraftmaschine ist mit einer Motorausgangswelle versehen und kann den Antriebsstrang im Betrieb unter vorbestimmten Gegebenheiten belasten. Der Antriebsstrang weist ferner eine Getriebeeinrichtung auf. In der Getriebeeinrichtung können stufenlos oder gestuft unterschiedliche Übersetzungen geschaltet werden. Die Getriebeeinrichtung kann beispielsweise ein automatisiertes Schaltgetriebe (ASG) sein. Die Getriebeeinrichtung kann auch ein Handschaltgetriebe oder eine sonstige Getriebeeinrichtung sein. Beispielsweise kann die Getriebeeinrichtung auch ein sogenanntes Parallelschaltgetriebe (PSG) sein.

Ferner ist in dem Antriebsstrang eine Kupplungseinrichtung vorgesehen. Diese kann eine Anfahrkupplung sein. Die Kupplungseinrichtung ist insbesondere als Reibungskupplung gestaltet. Die Kupplungseinrichtung ist insbesondere eine elektronisch gesteuerte Kupplungseinrichtung. Bei einer bevorzugten Gestaltung ist die Kupplungseinrichtung als Trockenkupplung gestaltet.

Es ist insbesondere eine Getriebeeingangswelle vorgesehen, die der Brennkraftmaschine zugewandt im Bereich der Getriebeeinrichtung vorgesehen ist und innerhalb des Antriebsstrangs zwischen der Kupplungseinrichtung und der Getriebeeinrichtung vorgesehen ist. Dies kann so sein, dass sich die Getriebeeingangswelle von der Kupplungseinrichtung zur Getriebeeinrichtung erstreckt.

In dem Antriebsstrang sind mehrere Bauteile mit Spiel gekoppelt. Dies können beispielsweise Bauteile sein, die auf der der Brennkraftmaschine abgewandten Seite der Kupplungseinrichtung im Antriebsstrang angeordnet sind. Ein solches Spiel kann an unterschiedlichen Stellen gegeben sein und sich zu einem Summenspiel ergänzen.

Mit Spiel gekoppelte Antriebsstrangbauteile können insbesondere (teilweise) mit solchen Teilen des Antriebsstrangs identisch sein, die bereits genannt wurden oder noch genannt werden, oder andere Teile sein. Beispielsweise kann Spiel zwischen ineinander greifenden Zahnrädern der Getriebeeinrichtung vorgesehen sein. Das Spiel kann beispielsweise auch im Differential gegeben sein, sofern ein solches vorhanden ist, oder an einer Gelenkwelle oder dergleichen. Auch an anderen Stellen kann Spiel im Antriebsstrang gegeben sein.

Erfindungsgemäß ist vorgesehen, dass der Antriebsstrang unter vorbestimmten Gegebenheiten in einen ersten Betriebsmodus, dem Normallastbetrieb, betrieben wird. Dieser Normallastbetrieb kann so sein, dass die Brennkraftmaschine das Fahrzeug gegen die einer Bewegung des Kraftfahrzeugs entgegengerichteten Widerstände bewegt, wobei das Spiel in der durch die Drehrichtung der Motorausgangswelle vorgegebenen Lastrichtung geschlossen ist. Die dem Fahrzeug entgegengerichteten Widerstände sind insbesondere Fahrwiderstände, wie Luftwiderstand, Haft- bzw. Rollreibung oder dergleichen.

Darunter, dass das Spiel der durch die Drehrichtung der Motorausgangswelle vorgegebenen Lastrichtung geschlossen ist, ist insbesondere zu verstehen, dass bei einer Belastung in dieser Richtung die mit Spiel ineinander greifenden Teile in dieser Richtung so anliegen, dass in dieser Richtung im wesentlichen kein Spiel gegeben ist, während in der Gegendrehrichtung der Motorausgangwelle sich das Spiel öffnet bzw. zwischen diesen Teilen gegeben ist.

Erfindungsgemäß ist vorgesehen, dass der Antriebsstrang außerhalb des Normallastbetriebs unter vorbestimmten Gegebenheiten bzw. bei Gegebensein vorbestimmter Bedingungen in einem zweiten Betriebsmodus betrieben wird, bzw. in diesen umgeschaltet wird. Dies bedeutet nicht zwangsläufig, dass dieser zweite Betriebsmodus stets gegeben ist, wenn der Normallastbetrieb nicht gegeben ist. In dem zweiten Betriebsmodus ist vorgesehen, dass in dem den auf der Brennkraftmaschine abgewandten Seite der Kupplungseinrichtung angeordneten Antriebsstrangabschnitt eine erste Last eingeleitet wird. Diese Last ist so gerichtet bzw. bewirkt, dass das Spiel abtriebsseitig dieser Lasteinleitungsstelle geschlossen wird oder geschlossen bleibt. Unter abtriebsseitig ist hierbei die Seite zu verstehen, die motorabgewandt angeordnet ist. Die erste Last ist dabei so, dass sie zur Überwindung der der Bewegung des Kraftfahrzeugs in der Ebene entgegengesetzten Widerstände nicht oder im wesentlichen nicht ausreichen würde. Dies bedeutet nicht, dass sich das Kraftfahrzeug im zweiten Betriebsmodus in der Ebene befinden muss.

Beispielsweise kann vorgesehen sein, dass das Kraftfahrzeug bei betätigter Betriebsbremse am Hang steht und die Hangabtriebskraft so ist, dass die Bremskraft überwunden wird und das Kraftfahrzeug sich bei geöffneter Kupplung in Bewegung setzt. Hierbei kann beispielsweise die Antriebseinrichtung auf dem der Brennkraftmaschine abgewandten Seite der Kupplungseinrichtung angeordneten Antriebsstrangabschnitt bzw. einem Teilabschnitt hiervon eine erste Last einleiten, so dass das Spiel abtriebsseitig der Lasteinleitungsstelle geschlossen wird bzw. geschlossen bleibt. Unter dem geschlossenen Spiel ist auch hier insbesondere so zu verstehen, dass bei gedachter Belastung durch die Motorausgangswelle das Spiel nicht auf der Seite der durch die Motorausgangswelle vorgegebene Lastrichtung angeordnet ist, sondern entgegengesetzt.

Bei einer solchen Bewegung am Hang ist also vorzugsweise vorgesehen, dass die von der Antriebseinrichtung eingeleitete Last bei einem mit Antriebsstrang versehenen Fahrzeug vorbestimmter Art nicht ausreichen würde, um die der Bewegung des Kraftfahrzeugs in der Ebene entgegengesetzten Widerstände zu überwinden.

Es sei angemerkt, dass der erste und der zweite und / oder weiteren Betriebsmodus nicht alle Betriebsmodi sein müssen, sondern vielmehr weitere Betriebsmodi gegeben sein können.

Es ist vorgesehen, dass eine von der Brennkraft verschiedene Antriebseinrichtung vorgesehen ist, die im Bereich der Lasteinleitungsstelle vorgesehen ist. Diese Antriebseinrichtung ist ein Startergenerator. Die Antriebseinrichtung kann beispielsweise an der Getriebeeinrichtung bzw. im Bereich der Getriebeeinrichtung vorgesehen sein. Es können auch andere Orte vorgesehen sein, an denen sich eine solche Antriebseinrichtung befindet. Die Antriebseinrichtung belastet unter vorbestimmten Gegebenheiten den Antriebsstrang, und dies bewirkt, dass das Spiel im Antriebsstrang abtriebsseitig dieser Lasteinleitungsstelle geschlossen wird oder geschlossen bleibt.

Die Kupplungseinrichtung kann in einen Status geschaltet werden, in welchem sie kein Drehmoment übertragen kann. Ferner kann die Kupplungseinrichtung in einen Status geschaltet werden, in welchem sie ein Drehmoment übertragen kann. Die Kupplungseinrichtung wird vorzugsweise automatisiert betätigt.

Der Status, in dem die Kupplungseinrichtung ein Moment übertragen kann, kann insbesondere in verschiedene Substatus unterteilt sein. Es kann beispielsweise vorgesehen sein, dass die Kupplungseinrichtung vollständig geschlossen werden kann. Ferner kann zusätzlich vorgesehen sein, dass die Kupplungseinrichtung so geschlossen werden kann, dass sie ein vorbestimmtes Drehmoment übertragen kann und bei größerer Lasteinleitung schlüpft.

Vorzugsweise ist eine Bremseinrichtung vorgesehen, mit welcher das Kraftfahrzeug bzw. der Antriebsstrang abgebremst werden kann. Eine solche Bremseinrichtung kann beispielsweise eine Betriebsbremse sein.

Ferner kann vorgesehen sein, dass der Antriebsstrang unter vorbestimmten Gegebenheiten bzw. bei Gegebensein vorbestimmter Bedingungen in einen weiteren Betriebsmodus geschaltet wird bzw. in einem weiteren Betriebsmodus betrieben wird. Dieser weitere Betriebsmodus ist insbesondere so, die Kupplungseinrichtung so weit geschlossen wird, dass sie ein vorbestimmtes erstes Kupplungsmoment übertragen kann. Dieses Kupplungsmoment ist insbesondere so, dass die Kupplungseinrichtung bei der anliegenden Motorlast schlupft. Als Bedingung dafür, dass dieses erste Kupplungsmoment geschaltet und / oder beibehalten wird, wird vorzugsweise gefordert, dass die Brennkraftmaschine läuft und die Bremseinrichtung betätigt ist.

In einer bevorzugten Gestaltung ist das vorbestimmte erste Kupplungsmoment, das von der Kupplungseinrichtung übertragen werden kann, so, dass es in der Ebene nicht ausreichen würde, um das Kraftfahrzeug aus dem Stillstand gegen die einer Bewegung des Kraftfahrzeugs entgegenwirkenden Widerstände in Bewegung zu setzen.

Vorzugsweise ist vorgesehen, dass die erste Last bzw. das erste Kupplungsmoment im wesentlichen so lange so gering gehalten wird, dass diese Last bzw. dieses Kupplungsmoment zur Überwindung der Widerstände nicht ausreichen würde, die der Bewegung des Kraftfahrzeugs in der Ebene entgegengerichtet sind, so lange das betreffende Antriebsstrangspiel zumindest teilweise geöffnet ist.

Es sei angemerkt, dass - wie erwähnt - eine erste Last in den Antriebsstrang eingeleitet werden kann oder ein erstes Kupplungsmoment aufgebaut werden kann, um das Antriebsstrangspiel in einem vorbestimmten Antriebsstrangabschnitt zu schließen oder geschlossen zu halten.

Zur vereinfachten Darstellung wird die Erfindung bzw. die bevorzugten Gestaltungen und beispielhaften Gestaltungen der Erfindung anhand einer Gestaltung näher erläutert, bei der mittels eines ersten Kupplungsmoments dieses Spiel geschlossen wird. Es sei allerdings angemerkt, dass in entsprechender Weise auch ergänzend oder alternativ die erste Last verwendet werden kann.

Bevorzugt wird das erste Kupplungsmoment auf einen Wert aufgebaut, der im wesentlichen zwischen 0,5 % und 3 % des von der Brennkraftmaschine im Antriebsstrang erzeugbaren und/oder des von der Kupplungseinrichtung maximal übertragbaren Drehmoments entspricht. Es kann vorgesehen sein, dass das erste Kupplungsmoment auf einen Wert aufgebaut wird, der im wesentlichen zwischen 0,1 N/m und 4 N/m beträgt. Aber auch andere Werte sind bevorzugt.

Gemäß einer bevorzugten Gestaltung wird die erste Last bzw. das erste Kupplungsmoment rampenförmig auf einen vorbestimmen Wert aufgebaut. Es kann auch vorgesehen sein, dass das erste Kupplungsmoment bzw. die erste Last, wenn sie wieder abgebaut wird, rampenförmig abgebaut wird.

Es können aber auch andere Formen des Momentenaufbaus und/oder des Momentenabbaus gegeben sein. Das Moment kann nach seinem Aufbau für eine vorbestimmte Zeitperiode auf einem konstanten Wert gehalten werden. Es kann aber auch vorgesehen sein, dass es nicht auf einem konstanten Wert gehalten wird, sondern laufend oder zeitweise verändert wird. In einer bevorzugten Gestaltung wird das erste Kupplungsmoment zeitlich beschränkt auf einem vorbestimmten Wert gehalten. Beispielsweise kann es fünf Sekunden auf einem bestimmten Wert gehalten werden. Es kann auch vorgesehen sein, dass eine andere Zeitperiode vorgesehen ist, die größer oder kleiner als fünf Sekunden ist. Es kann auch vorgesehen sein, dass ein Maximalwert für eine Zeitperiode vorgesehen ist, während der das Moment auf einem konstanten oder nicht konstanten Wert gehalten wird.

Vorzugsweise wird das erste Kupplungsmoment bzw. die erste Last anschließend auf Null reduziert.

Es kann auch vorgesehen sein, dass beim Momentenaufbau das Moment kurzzeitig am Anfang überhöht wird.

Es können aber auch andere Gestaltungen des Momentenaufbaus sowie des Momentenabbaus und eines gegebenenfalls dazwischen vorliegenden Momentenverlaufs des ersten Kupplungsmoments gegeben sein.

Wie bereits erwähnt, gilt entsprechendes für die erste Last.

In einer bevorzugten Gestaltung ist vorgesehen, dass das erste Kupplungsmoment innerhalb einer vorbestimmten Zeitperiode aufgebaut wird. Eine solche Zeitperiode kann beispielsweise im Bereich von 200 bis 800 ms liegen. Aber auch andere Zeitperioden für den Momentenaufbau sind bevorzugt. Entsprechendes gilt für den Momentenabbau des ersten Kupplungsmoments.

Vorzugsweise ist vorgesehen, dass die Kupplungseinrichtung außerhalb des zweiten und/oder dritten Betriebsmodus des Antriebsstrangs geöffnet ist oder geöffnet wird, wenn das Kraftfahrzeug bzw. das abtriebsseitige Ende des Kraftfahrzeugs im Stillstand ist, ein Gang in der Getriebeeinrichtung eingelegt ist und eine Bremseinrichtung des Kraftfahrzeugs betätigt ist. Der eingelegte Gang kann dabei insbesondere ein Vorwärtsgang sein. Er kann allerdings auch ein Rückwärtsgang sein. Die Bremseinrichtung ist vorzugsweise eine Betriebsbremse des Kraftfahrzeugs.

Es sei angemerkt, dass die Betriebsbremse insbesondere so sein kann, dass sie auf das abtriebsseitige Ende des Antriebsstrangs, insbesondere auf Räder, die dort an Achsen angeordnet sein können, einwirkt.

In einer bevorzugten Gestaltung des erfindungsgemäßen Verfahrens wird die Neigung des Kraftfahrzeugs gegenüber dem Untergrund qualitativ und/oder quantitativ ermittelt. Es sei auch in diesem Zusammenhang angemerkt, dass auch die Neigung des Antriebsstrangs in bezug auf eine vorbestimmte Ebene ermittelt werden kann.

Es kann beispielsweise vorgesehen sein, dass bei detektierter Neigung des Kraftfahrzeugs bzw. des Antriebsstrangs unter vorbestimmten Gegebenheiten darauf geschlossen wird, dass sich das Kraftfahrzeug bzw. ein abtriebsseitiger Antriebsstrangabschnitt unter Wirkung der Abtriebskraft in Bewegung setzt, wenn vorbestimmte Bedingungen gegeben sind. Solche Bedingungen können beispielsweise darin bestehen, dass die Kupplungseinrichtung geöffnet ist und/oder das Fahrzeug bzw. der endseitige Antriebsstrangabschnitt zuvor im Stillstand war und/oder eine Bremseinrichtung des Kraftfahrzeugs bzw. eine auf den Endbereich des Antriebsstrangs einwirkende Bremseinrichtung geschlossen ist und eine Bewegung des endseitigen Antriebsstrangabschnitts bzw. des Kraftfahrzeugs festgestellt wird.

Es sei angemerkt, dass unter einer geschlossenen Bremseinrichtung insbesondere zu verstehen ist, dass diese Bremseinrichtung so weit geschlossen ist, dass eine Bremskraft wirkt. Dies kann eine vorbestimmte Mindestbremskraft bzw. ein vorbestimmter Mindestdruck sein oder eine überhaupt wirkende Bremskraft bzw. ein überhaupt wirkender Bremsdruck, also eine Bremskraft bzw. ein Bremsdruck, der größer als Null ist.

Dies bedeutet, dass die Bremskraft bzw. der Bremsdruck bei betätigter Bremse in einer bevorzugten Gestaltung nicht maximal sein muss.

In einer bevorzugten Gestaltung ist vorgesehen, dass auf den Antriebsstrang bzw. das Kraftfahrzeug eine Bremseinrichtung, die beispielsweise als Betriebsbremse ausgestaltet sein kann, einwirken kann. Dabei ist besonders bevorzugt vorgesehen, dass ein Bremslichtsignal bzw. ein Bremssignal erzeugt werden kann bzw. erzeugt wird, wenn die Bremseinrichtung betätigt ist bzw. zumindest teilweise betätigt ist. Auch hier gilt, dass das Betätigen der Bremseinrichtung so sein kann, dass die Bremseinrichtung ein vorbestimmtes Mindestbremsmoment bzw. eine vorbestimmte Mindestbremskraft bzw. einen vorbestimmten Mindestbremsdruck erzeugt oder so, dass überhaupt eine Bremskraft bzw. ein Bremsdruck bzw. ein Bremsmoment erzeugt wird.

Es kann auch vorgesehen sein, dass ermittelt wird, ob eine Getriebeeingangswelle mit einer Drehzahl rotiert, die geringer als die Motordrehzahl ist. Hierbei können gegebenenfalls vorhandene Übersetzungen berücksichtigt werden. Dies kann so sein, dass etwaige Übersetzungen zwischen der Getriebeeingangswelle und der Motorausgangswelle so berücksichtigt werden, dass die jeweiligen Drehzahlen dieser Wellen auf einen vorbestimmten Bezugspunkt umgerechnet werden. Es kann allerdings auch vorgesehen sein, dass die Getriebeeingangswelle und die Motorausgangswelle bei vollständig geschlossener Kupplungseinrichtung mit der gleichen Drehzahl rotieren.

In einer bevorzugten Gestaltung ist vorgesehen, dass die Betätigung einer Bremseinrichtung festgestellt wird oder angenommen wird, wenn festgestellt oder ermittelt wird, dass ein Bremslichtsignal gegeben ist oder erzeugt wird.

Bevorzugt wird der Antriebsstrang unter vorbestimmten Gegebenheiten im zweiten Betriebsmodus und/oder im weiteren Betriebsmodus betrieben oder in diesem Betriebsmodus geschaltet, wenn ermittelt wurde, dass die Getriebeeingangswelle bei in der Getriebeeinrichtung eingelegtem Gang sowie bei laufender Brennkraftmaschine und bei betätigter Bremseinrichtung mit einer Drehzahl rotiert, die geringer als die aktuelle Motordrehzahl ist. Besonders bevorzugt ist hierbei vorgesehen, dass zusätzlich als Bedienung gefordert wird, dass die Drehzahl der Getriebeeingangswelle größer als Null ist.

Es sei in diesem Zusammenhang angemerkt, dass eventuelle Übersetzungen berücksichtigt werden können.

Es kann auch vorgesehen sein, dass anstelle der Betätigung der Bremseinrichtung oder ergänzend gefordert wird, dass ein Bremssignal erzeugt wird. Es kann auch vorgesehen sein, dass aus einem gegebenen bzw. detektierten Bremssignal darauf geschlossen wird, dass die Bremseinrichtung betätigt ist.

Es kann auch zusätzlich gefordert werden, dass das Fahrzeug rollt.

Insbesondere kann vorgesehen sein, dass bei betätigter Bremseinrichtung das erste Kupplungsmoment nur bei Rollen in Fahrtrichtung des eingelegten Ganges aufgebaut wird, und zwar insbesondere, wenn andere der genannten vorbestimmten Bedingungen gegeben sind.

In einer besonders bevorzugten Gestaltung wird ein geringes Kupplungsmoment, wie beispielsweise bis 2 bis 4 Nm, rampenförmig aufgebaut, wenn das Gegebensein der vorgenannten Bedingungen erkannt wird. Dieser Aufbau kann beispielsweise innerhalb einer Zeitperiode von 200 bis 400 ms stattfinden. Es sei allerdings angemerkt, dass das geringe Kupplungsmoment auch einen anderen Wert aufweisen kann oder auf eine andere Art und Weise aufgebaut werden kann. Ebenso kann die angegebene Zeitperiode eine andere Zeitperiode sein.

Vorzugsweise wird der Antriebsstrang im weiteren Betriebsmodus betrieben bzw. wird in den weiteren Betriebsmodus gewechselt, wenn vorbestimmte Bedingungen gegeben sind und die Kupplungstemperatur geringer als eine vorbestimmte Temperaturschwelle ist. Solche vorbestimmten Bedingungen können insbesondre die oben genannten sein, also die, dass die Bremseinrichtung betätigt ist, ein Gang in der Getriebeeinrichtung eingelegt ist, die Brennkraftmaschine läuft und die Geschwindigkeit des Fahrzeugs die Getriebeeingangswelle rotieren lässt, allerdings mit einer Geschwindigkeit, die geringer als die aktuelle Motordrehzahl ist.

Aber auch andere Bedingungen können bei dieser bevorzugten Gestaltung zusätzlich oder alternativ zu der hinzutreten, dass die Kupplungstemperatur geringer als eine vorbestimmte Temperaturschwelle ist.

Vorzugsweise ist vorgesehen, dass das Kupplungsmoment oberhalb einer vorbestimmten Grenzkupplungstemperatur nicht aufgebaut werden kann und / oder nicht im zweiten oder dritten Betriebsmodus betrieben werden kann.

Bevorzugt ist auch, dass der Antriebsstrang nur dann im zweiten und/oder im weiteren Betriebsmodus betrieben wird, wenn mehrfach detektiert wurde, dass vorbestimmte Bedingungen gegeben sind, die zum Betrieben im und / oder zum Schalten in den zweiten und/oder weiteren Betriebsmodus gegeben sein sollen. Dies kann insbesondere so sein, dass zweimal oder dreimal oder viermal oder fünfmal oder auch mehr als fünfmal das Vorhandensein der vorbestimmten Bedingungen gefordert wird, ehe in den zweiten und/oder weiteren Betriebsmodus gewechselt wird bzw. der Antriebsstrang in diesem Betriebsmodus betrieben wird. Besonders bevorzugt ist vorgesehen, dass der Aufbau des ersten Kupplungsmoments erst dann zugelassen wird, nachdem die entsprechenden Bedingungen bzw. die entsprechenden Situationen mehrfach detektiert wurden und inzwischen kein "Kupplungssynchron" erreicht wurde.

Vorzugsweise wird der Antriebsstrang für eine vorbestimmte Zeitperiode im zweiten und/oder im weiteren Betriebsmodus betrieben, wenn in diesen Betriebsmodus geschaltet wurde. Es kann auch vorgesehen sein, dass eine maximale Zeitperiode festgelegt ist, oder eine minimale, während der Antriebsstrang in diesem zweiten oder weiteren Betriebsmodus betrieben wird, nachdem er in diesen geschaltet wurde.

Eine solche Zeitperiode kann beispielsweise fünf Sekunden sein. Sie kann aber auch eine andere Dauer haben. Besonders bevorzugt ist vorgesehen, dass nach dieser Zeitperiode das von der Kupplung übertragbare Drehmoment wieder auf Null reduziert wird.

In einer bevorzugten Gestaltung wird die Rollrichtung des Kraftfahrzeugs bzw. eine entsprechende Drehrichtung des abtriebsseitigen Antriebsstrangbereichs ermittelt. Es kann vorgesehen sein, dass der Antriebsstrang nur dann im zweiten und/oder im dritten Betriebsmodus betrieben wird bzw. in diesen Betriebsmodus geschaltet wird, wenn ermittelt wurde, dass vorbestimmte Bedingungen gegeben sind und die Rollrichtung des Kraftfahrzeuges bzw. die Drehrichtung des Antriebsstrangs der Fahrt- bzw. Drehrichtung entspricht, die dem aktuell in der Getriebeeinrichtung eingelegten Gang zugeordnet ist bzw. entspricht. Auch diese vorbestimmten Bedingungen können solche sein, die bereits erwähnt wurden oder solche, die im folgenden noch erwähnt werden oder andere.

Hinsichtlich der in der Getriebeeinrichtung eingelegten Gänge wird insbesondere zwischen Vorwärtsgängen und dem oder den Rückwärtsgängen unterschieden.

Es kann vorgesehen sein, dass der Gradient des Bremsdrucks der Bremseinrichtung ermittelt wird und/oder der Bremsdruck. In entsprechender Weise kann auch die Bremskraft bzw. das Bremsmoment oder deren jeweiliger Gradient ermittelt werden.

In einer bevorzugten Gestaltung ist vorgesehen, dass der Antriebsstrang in den zweiten und/oder dritten Betriebsmodus geschaltet wird, wenn festgestellt wird, dass vorbestimmte Bedingungen gegeben sind und der Gradient des Bremsdrucks bzw. der Bremskraft bzw. des Bremsmoments eine vorbestimmte Stelle überschreitet und/oder der Bremsdruck bzw. die Bremskraft bzw. das Bremsmoment eine vorbestimmte Schwelle unterschreitet.

Auch hier können die vorbestimmten Bedingungen solche sein, die bereits erwähnt wurden oder solche, die noch im folgenden erwähnt werden.

In einer bevorzugten Gestaltung ist vorgesehen, dass das erste Kupplungsmoment, das von der Kupplungseinrichtung übertragbar ist, aufgebaut wird, wenn festgestellt wird, dass vorbestimmte Bedingungen gegeben sind und der Gradient des Bremsdrucks bzw. des Bremsmoments bzw. der Bremskraft eine vorbestimmte Schwelle überschreitet. Es kann auch vorgesehen sein, dass dieses erste Kupplungsmoment aufgebaut wird, wenn der Bremsdruck bzw. die Bremskraft bzw. das Bremsmoment eine vorbestimmte Schwelle unterschreiten.

Besonders bevorzugt ist vorgesehen, dass bei Überschreiten bzw. Unterschreiten der genannten Schwelle das erste Kupplungsmoment aufgebaut wird und dieses das erste Kupplungsmoment wieder abgebaut wird, wenn später festgestellt wird, dass das Fahrzeug nicht rollt bzw. der Antriebsstrang nicht entsprechend in Bewegung ist.

In einer besonders bevorzugten Gestaltung ist vorgesehen, dass ein Kraftfahrzeug bzw. der abtriebsseitige Endbereich des Antriebsstrangs zunächst im Stillstand ist und ein Gang in der Getriebeeinrichtung eingelegt ist. Dies kann insbesondere ein Vorwärtsgang sein. Ferner ist bei dieser bevorzugten Gestaltung vorgesehen, dass die Bremse betätigt ist und die Kupplung - insbesondere deswegen - geöffnet ist. Bei dieser bevorzugten Gestaltung kann ferner vorgesehen sein, dass in dem Fall, dass das Fahrzeug auf einer abschüssigen Straße steht und die Bremse dadurch langsam gelöst wird bzw. das Kraftfahrzeug langsam zu rollen beginnt, wobei der Bremslichtschalter noch betätigt ist, der Triebstrang von hinten, also von der Abtriebsseite bzw. abtriebsseitig, angetrieben wird, wobei diese Gesamtsituation erkannt wird bzw. festgestellt wird. Bei dieser bevorzugten Gestaltung ist dann insbesondere vorgesehen, dass langsam ein leichtes, von der Kupplung übertragbares, erstes, Kupplungsmoment aufgebaut wird, um das Spiel im Triebstrang langsam und / oder mit geringem Moment abzubauen.

Es kann bei dieser bevorzugten Gestaltung ferner vorgesehen sein, dass in einem regulären Betrieb die Kupplung geschlossen wird, wenn der Fahrer - zum Beispiel durch Betätigung des Gaspedals - einen Anfahrwunsch äußert und/oder wenn - insbesondere dadurch ausgelöst, dass der Bremslichtschalter gelöst wird - eine Kriechfunktion aktiviert wird. Dabei ist insbesondere vorgesehen, dass die Kupplung bei "Kriechen" weiter geschlossen ist bzw. ein größeres Drehmoment übertragen kann, als es dem ersten Kupplungsmoment entspricht bzw. als im dritten Betriebsmodus gegeben ist. Ferner ist insbesondere vorgesehen, dass das Kupplungsmoment, dass aufgebaut wird, wenn der Fahrer einen Anfahrwunsch äußert größer als das Kupplungsmoment ist, das beim "Kriechen" aufgebaut wird.

Die Aufgabe wird ferner gelöst durch einen Antriebsstrang für ein Kraftfahrzeug gemäß Anspruche 14.

Es ist also vorgesehen, dass der Antriebsstrang mit einer Brennkraftmaschine gekoppelt ist oder koppelbar ist und eine als Reibungskupplung gestaltete Anfahrkupptungseinrichtung aufweist. Bei dieser Gestaltung weist der Antriebsstrang ferner eine Getriebeeinrichtung auf. Die Reibungskupplung sowie die Getriebeeinrichtung kann beispielsweise so gestaltet sein, wie es bereits oben erwähnt wurde.

Bei dieser Gestaltung ist ferner ein elektronisches Steuergerät vorgesehen. Dieses elektronische Steuergerät kann eine Speichereinrichtung aufweisen oder mit einer Speichereinrichtung gekoppelt sein. In dieser Speichereinrichtung ist ein Steuerungsprogramm gespeichert, das insbesondere ein Computerprogramm bzw. eine Software sein kann.

Erfindungsgemäß ist vorgesehen, dass dieses in der Speichereinrichtung abgelegte Steuerungsprogramm im Zusammenwirken mit den genannten Bauteilen bzw. einem Teil dieser Bauteile ein erfindungsgemäßes Verfahren steuern kann bzw. in entsprechenden Situationen, die beispielhaft oben geschildert sind, steuert.

Es ist vorgesehen, dass als Antriebseinrichtung, ein Startergenerator vorgesehen ist. Diese Antriebseinrichtung ist von der Brennkraftmaschine des Kraftfahrzeugs verschieden.

Die Belastung erfolgt im Bereich einer Lasteinleitungsstelle. Die Lasteinleitungsstelle kann beispielsweise in der Getriebeeinrichtung bzw. im Bereich der Getriebeeinrichtung vorgesehen sein. Bei dieser Gestaltung kann insbesondere vorgesehen sein, dass die Belastung des Antriebsstrangs im Bereich dieser Lasteinleitungsstelle so ist, dass das Spiel im Antriebsstrang abtriebseitig dieser Lasteinleitungsstelle geschlossen wird oder geschlossen bleibt.

Eine solche Antriebseinrichtung kann mit dem elektronischen Steuergerät in Signalverbindung stehen. Dabei kann insbesondere vorgesehen sein, dass das elektronische Steuergerät die Antriebseinrichtung- zumindest unter anderem - steuert.

Es kann auch vorgesehen sein, dass das elektronische Steuergerät die I<upplungsbetätigung bzw. Kupplungseinrichtung steuert, und zwar insbesondere so, dass die Kupplungseinrichtung gemäß einem erfindungsgemäßen Verfahren betätigt wird bzw. betätigt werden kann.

Es sei angemerkt, dass ein Antriebsstrang so gestaltet sein kann, dass ein etwaiges Antriebsstrangspiel unter vorbestimmten Gegebenheiten mittels einer Antreibseinrichtung, wie Startergenerator, geschlossen wird. Es kann auch vorgesehen sein, dass dieses Spiel mittels einer Kupplungseinrichtung geschlossen wird.

Auch Kombinationen dieser Gestaltungen sind bevorzugt.

In einer bevorzugten Gestaltung tritt das elektronische Steuergerät mit wenigstens einem Elektromotor in Signalverbindung. Dieser Elektromotor kann dabei ein Elektromotor sein, mittels welchem die Kupplungseinrichtung betätigt werden kann. In der Übertragungsstrecke zwischen dem Elektromotor und der Kupplungseinrichtung können beispielsweise mechanische oder hydraulische Bauteile gegeben sein. Auf einem entsprechenden Prinzip kann die Kraftübertragung basieren. Auch andere Prinzipien sind bevorzugt.

Unter dem Begriff "Steuern" ist im Sinne der vorliegenden Erfindung insbesondere "Regeln" und / oder "Steuern" im Sinne der DIN zu verstehen. Entsprechendes gilt für von dem Begriff "Steuern" abgeleitete Begriffe.

Im folgenden werden nun einige beispielhaft bzw. bevorzugte Aspekte der erfindungsgemäßen Gestaltungen anhand der Figuren erläutert, wodurch die Erfindung allerdings nicht beschränkt werden soll.

Dabei zeigt:
Fig. 1 die Schritte eines beispielhaften erfindungsgemäßen Verfahrens in schematischer Darstellung;
Fig. 2 eine beispielhafte Ausführungsform der Erfindung in schematischer Darstellung;
Fig. 3 ein Zahnradpaar einer Vorwärtsgangstufe, bei der Spiel zwischen den Zahnrädern gegeben ist, in schematischer, beispielhafter Gestaltung;
Fig. 4 ein Zahnradpaar gemäß Fig. 3 in einer anderen Relativstellung;
Fig. 5 ein Zahnradpaar gemäß Fig. 3 und Fig. 4 in einer weiteren Relativstellung; und
Fig. 6 eine Zahnradanordnung eines Rückwärtsgangs, bei der Spiel zwischen den Zahnrädern gegeben ist, in schematischer, beispielhafter Gestaltung.

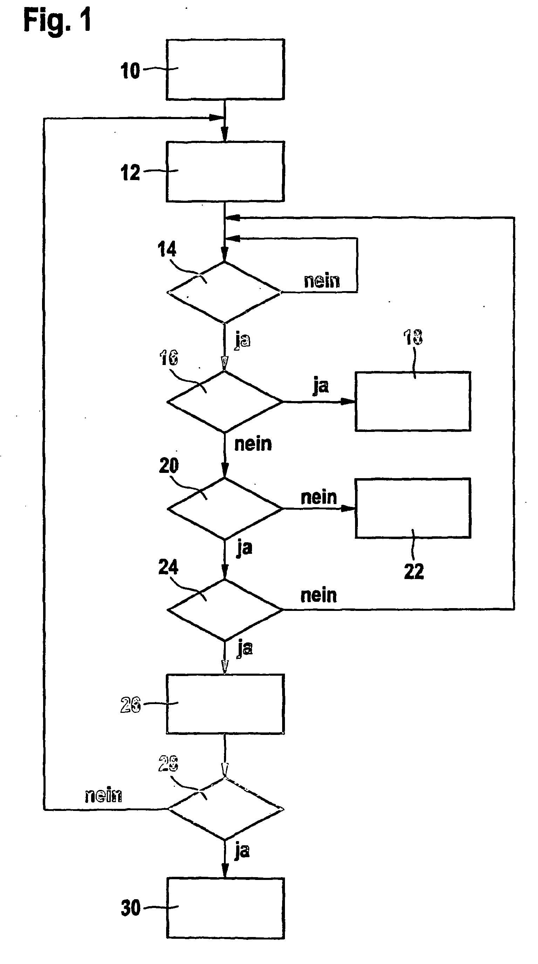

Fig. 1 zeigt die Schritte eines beispielhaften erfindungsgemäßen Verfahrens in schematischer Darstellung.

Im Schritt 10 wird ein Zähler auf Null gesetzt.

Im Schritt 12 befindet sich ein Kraftfahrzeug mit Antriebsstrang im Stillstand. Ferner ist im Schritt 12 ein Gang in einer Getriebeeinrichtung des Antriebsstrangs eingelegt. Dies kann insbesondere ein Vorwärtsgang sein. Im Schritt 12 ist ferner eine Bremseinrichtung, wie Betriebsbremse, des Kraftfahrzeugs betätigt. Ferner ist im Schritt 12 eine in dem Antriebsstrang angeordnete Anfahrkupplung geöffnet, so dass diese Kupplung im wesentlichen kein Drehmoment übertragen kann. Diese Kupplungseinrichtung kann insbesondere eine automatisierte Kupplungseinrichtung sein. Es kann auch vorgesehen sein, dass im Schritt 12 überprüft wird, ob diese Bedingungen gegeben sind.

Im Schritt 14 wird überprüft, ob das Kraftfahrzeug nach wie vor im Stillstand ist oder ob sich das Kraftfahrzeug in Bewegung setzt. Es kann auch vorgesehen sein, dass zusätzlich überprüft wird, ob ein Gang nach wie vor in der Getriebeeinrichtung eingelegt ist und die Bremse betätigt ist und die Kupplung geöffnet ist. Anstelle der Überprüfung, ob eine Bremse betätigt ist, kann auch überprüft werden, ob ein Bremslichtschalter betätigt ist.

Sofern im Schritt 14 festgestellt wird, dass das Fahrzeug nach wie vor im Stillstand ist, wird im Schritt 14 fortgefahren. Sofern über Schritt 14 ferner überprüft wird, ob ein Gang in der Getriebeeinrichtung eingelegt ist und die Bremseinrichtung betätigt ist und die Kupplungseinrichtung offen ist, wird ferner im Schritt 14 fortgefahren, wenn eine dieser Bedingungen nicht gegeben ist.

Im Schritt 16 wird überprüft, ob das Gaspedal eines Kraftfahrzeugs betätigt ist, sofern der Antriebsstrang in einem Kraftfahrzeug angeordnet ist. Sofern dies nicht der Fall ist, kann der Schritt 16 auch weggelassen werden.

Sofern im Schritt 16 ermittelt wird, dass das Gaspedal betätigt ist, wird im Schritt 18 fortgefahren. Im Schritt 18 wird die Kupplungseinrichtung zum Fahren des Kraftfahrzeugs geschlossen bzw. um das Kraftfahrzeug in einem normalen Fahrbetrieb zu bewegen. Dabei wird die Kupplungseinrichtung gemäß einer vorbestimmten Charakteristik, die beispielsweise elektronisch gesteuert sein kann, geschlossen.

Sofern im Schritt 16 allerdings ermittelt wird, dass das Gaspedal nicht betätigt ist, wird im Schritt 20 überprüft, ob die Bremseinrichtung nach wie vor geschlossen ist. Dieser Schritt kann auch weggelassen werden. Sofern im Schritt 20 ermittelt wird, dass die Bremseinrichtung nicht mehr geschlossen ist, wird im Schritt 22 fortgefahren. Im Schritt 22 wird die Kupplungseinrichtung geschlossen und zwar so, dass sie ein beschränktes vorbestimmtes Drehmoment übertragen kann. Dieses vorbestimmte Drehmoment ist so, dass das Fahrzeug zu kriechen beginnt.

Sofern im Schritt 20 jedoch ermittelt wurde, dass die Bremseinrichtung nach wie vor geschlossen ist, wird im Schritt 24 fortgefahren.

Im Schritt 24 wird überprüft, ob nach wie vor ein Gang in der Getriebeeinrichtung eingelegt ist, ob die Brennkraftmaschine, die den Antriebsstrang belastet bzw. belasten kann, läuft und gegebenenfalls, ob die Bremseinrichtung nach wie vor betätigt ist. Ferner wird im Schritt 24 überprüft, ob eine Geschwindigkeit des Kraftfahrzeugs bzw. des abtriebsseitigen Ende des Antriebsstrangs detektiert wird, die die Getriebeeingangswelle rotieren lässt, und zwar so, dass die Drehzahl der Getriebeeingangswelle geringer ist als die aktuelle Motordrehzahl. Hierbei können gegebenenfalls Übersetzungen berücksichtigt werden.

Sofern im Schritt 24 festgestellt wird, dass kein Gang in der Getriebeeinrichtung eingelegt ist oder die Brennkraftmaschine nicht läuft oder nicht eine Geschwindigkeit des Fahrzeugs gegeben ist, die die Getriebeeingangswelle bei einer Drehzahl rotieren lässt, die geringer als die aktuelle Motordrehzahl ist, oder- sofern dies überprüft wurde - die Bremse nicht betätigt ist, wird im Schritt 14 fortgefahren.

Sofern im Schritt 24 allerdings festgestellt wird, dass ein Gang in der Getriebeeinrichtung eingelegt ist, die Brennkraftmaschine läuft und eine Geschwindigkeit des Fahrzeugs gegeben ist, die die Getriebeeingangswelle rotieren lässt, und zwar mit einer Drehzahl, die geringer als die aktuelle Motordrehzahl ist, und - sofern dies überprüft wurde - die Bremse betätigt ist, wird im Schritt 26 fortgefahren.

Im Schritt 28 wird überprüft, ob der Zähler, der im Schritt 26 um "1" erhöht wurde, größer als ein vorbestimmter Wert ist. Gegebenenfalls wird zusätzlich überprüft, ob der Zeitzähler einen vorbestimmten Wert überschritten hat.

Hierdurch kann in einer bevorzugten Gestaltung überprüft werden, ob die Bedingungen, die im Schritt 24 überprüft wurden, mehrmals gegeben waren oder mehrmals innerhalb einer vorbestimmten Zeitperiode gegeben waren. In einer anderen bevorzugten Gestaltung können solche Zähler auch weggelassen werden.

Sofern jedoch derartige Zähler verwendet werden und im Schritt 28 festgestellt wird, dass der Zähler, der im Schritt 26 um "1" erhöht wird, die im Schritt 28 überprüfte Grenze nicht erreicht hat und/oder die Zeitperiode eine vorbestimmte Zeitschwelle nicht überschritten hat, wird im Schritt 12 fortgefahren. Es sei angemerkt, dass ein solcher Zähler auch an anderer Stelle oder mehreren anderen Stellen integriert sein kann.

Sofern im Schritt 28 - bei Vorhandensein entsprechender Zähler - allerdings festgestellt wird, dass die entsprechenden Grenzen erreicht sind, wird im Schritt 30 die Kupplungseinrichtung geringfügig geschlossen, so dass sie ein beschränktes Drehmoment übertragen kann. Dieses Drehmoment ist vorzugsweise so, dass es bei in der Ebene stehendem Kraftfahrzeug nicht ausreichen würde, um dieses Kraftfahrzeug gegen die Fahrwiderstände in Bewegung zu setzen. Insbesondere ist dieses von der Kupplungseinrichtung übertragbare erste Drehmoment, das im Schritt 30 eingestellt bzw. aufgebaut wird, geringer als das Drehmoment, das im Schritt 22 aufgebaut wird.

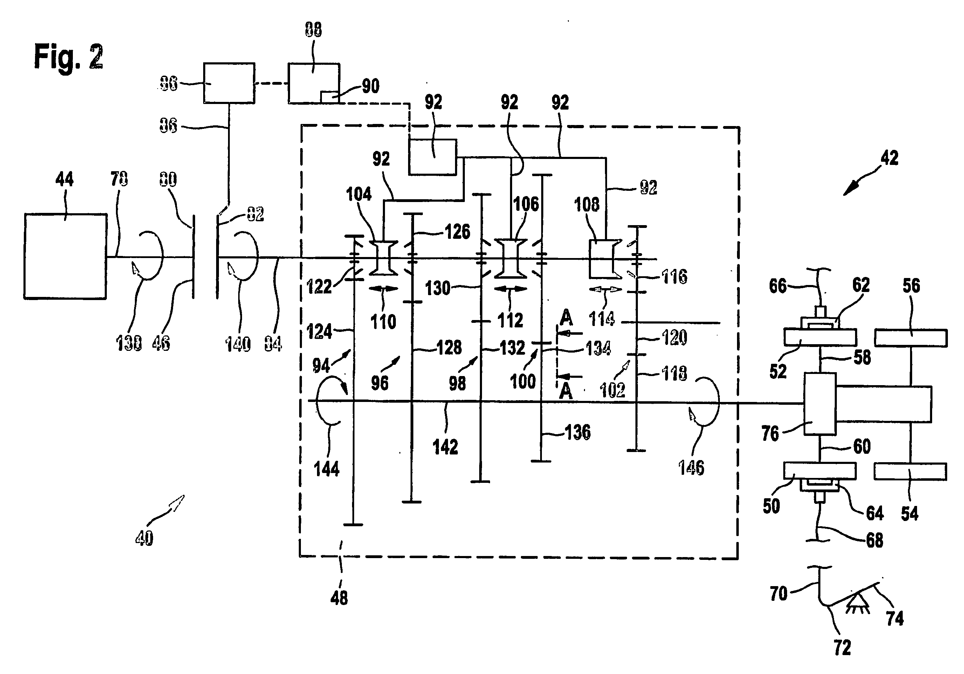

Fig. 2 zeigt ein Beispiel eines erfindungsgemäßen Antriebsstrangs 40, der in einem Kraftfahrzeug 42 angeordnet ist, in stark schematischer Darstellung.

In der Gestaltung gemäß Fig. 2 ist eine Brennkraftmaschine 44 vorgesehen, die den Antriebsstrang 40 belasten kann. Ferner weist der Antriebsstrang 40 eine Kupplungseinrichtung 46 auf, die beispielsweise eine automatisierte Kupplungseinrichtung sein kann und insbesondere eine Reibungskupplung ist. Die 40 eine Kupplungseinrichtung 46 ist insbesondere eine Anfahrkupplung des Kraftfahrzeuges 42.

Im Antriebsstrang 40 ist weiter eine Getriebeeinrichtung 48 vorgesehen. Ferner sind Räder 50, 52, 54, 56 vorgesehen, von denen zumindest ein Teil 50, 52 mit Antriebsachsen 58, 60 gekoppelt ist. Insbesondere können die Vorderachsen angetrieben werden oder die Hinterachsen oder sowohl die Vorderachsen als auch die Hinterachsen.

Es ist ferner eine Bremseinrichtung 62, 64, 66, 68, 70 mit einem Betätigungsmechanismus 66, 68, 70, 72 vorgesehen. Dieser Betätigungsmechanismus 66, 68, 70, 72 kann beispielsweise ein Bremspedal 74 aufweisen.

Gegebenenfalls ist ferner ein Differential 76 vorgesehen.

Die Brennkraftmaschine 44 ist mit einer Motorausgangswelle 78 versehen, die sich in Richtung des Kupplungseingangsteils 80 der Kupplungseinrichtung 46 erstreckt.

Abtriebsseitig, also der Brennkraftmaschine 44 abgewandt, der Kupplungseinrichtung 46 bzw. des Kupplungsausgangsteils 82 ist die Getriebeeinrichtung 48 vorgesehen. Zwischen der Kupplungseinrichtung 46 und der Getriebeeinrichtung 48 ist eine Getriebeeingangswelle 84 angeordnet, die zum Getriebe gehört bzw. sich in das Getriebe erstreckt.

Die Kupplungseinrichtung 46 kann von einem Kupplungsbetätigungsmechanismus, der schematisch durch das Bezugszeichen 86 verdeutlicht wird, betätigt werden. Diese Betätigung ist in der Gestaltung gemäß Fig. 2 so, dass die Kupplung 46 so geöffnet werden kann, dass sie kein Drehmoment übertragen kann, und so geschlossen werden kann, dass sie ein beschränktes Drehmoment übertragen kann, und weiter geschlossen werden kann. Wenn die Kupplung 46 ihr maximales Kupplungsmoment übertragen kann, ist vorzugsweise vorgesehen, dass dieses maximale von der Kupplung übertragbare Drehmoment größer ist als das Drehmoment, das von der Brennkraftmaschine 44 maximal erzeugt werden kann.

Der Betätigungsmechanismus 86 kann auf unterschiedliche Weise gestaltet sein. Beispielsweise kann er mechanische oder hydraulische Komponenten aufweisen. Er kann ferner einen Elektromotor aufweisen.

Es ist ferner ein elektronisches Steuergerät 88 vorgesehen. Dieses elektronische Steuergerät 88 weist eine Speichereinrichtung 90 auf, in welcher ein Steuerungsprogramm gespeichert ist. Es kann vorgesehen sein, dass mittels dieses elektronischen Steuergeräts 88 der Betätigungsmechanismus 86 bzw. die Betätigung der Kupplungseinrichtung 46 gesteuert wird. Es kann - ergänzend oder alternativ - auch vorgesehen sein, dass die Getriebeeinrichtung 48 von dem elektronischen Steuergerät 88 angesteuert werden kann. Dies kann insbesondere dann der Fall sein, wenn die Getriebeeinrichtung 48 als automatisiertes Schaltgetriebe ausgebildet ist. Die Getriebeeinrichtung 48 kann allerdings auch anders ausgestaltet sein.

Es kann auch ein separates elektronisches Steuergerät zur Ansteuerung der Getriebeeinrichtung 48 vorgesehen sein, was in Fig. 2 nicht gezeigt ist. Es ist ferner ein Betätigungsmechanismus 92 vorgesehen, über den die Getriebeeinrichtung 48 betätigt werden kann.

Ein solcher Betätigungsmechanismus 92 kann beispielsweise Elektromotoren aufweisen, wie insbesondere einen Elektromotor zum Verstellen der Getriebeeinrichtung in Wählrichtung und einen Elektromotor zum Verstellen der Getriebeeinrichtung in Schaltrichtung.

Der Betätigungsmechanismus 92 kann auf den unterschiedlichsten Prinzipien basieren, wie beispielsweise auf einem mechanischen und/oder hydraulischen Prinzip. In der Gestaltung gemäß Fig. 2 weist die Getriebeeinrichtung 48 ferner Gangstufen 94, 96, 98, 100, 102 auf, zwischen welchen mittels der Betätigungseinrichtung 92 sowie mittels Schaltelementen 104, 106, 108, die auch Teil der Betätigungseinrichtung 92 sein können, geschaltet werden kann, wie durch die Doppelpfeile 110, 112, 114 schematisch angedeutet ist.

In der Gestaltung gemäß Fig. 2 sind die Gangstufen 94, 96, 98, 100 Vorwärtsgänge, während die Gangstufe 102 eine Gangstufe des Rückwärtsganges ist. Dies kann in Fig. 2 beispielsweise daran erkannt werden, dass zwischen den Zahnrädern 116 und 118 ein Zahnrad 120 vorgesehen ist, welches eine Drehrichtungsumkehr im Vergleich zu den Zahnrädern 122, 124 bzw. 126, 128 bzw. 130, 132 bzw. 134, 136 bewirkt.

Es sei allerdings angemerkt, dass die Erfindung nicht auf Zahnradgetriebe oder gestuft schaltbare Getriebe beschränkt sein soll.

Bei Betätigung der Brennskraftmaschine 44 wird die Motorausgangswelle 78 in einer vorbestimmten Drehrichtung belastet, wie durch den Pfeil 138 schematisch angedeutet ist. Bei der in Fig. 2 dargestellten Ausführungsform ist dies stets die gleiche Drehrichtung. Es kann allerdings auch vorgesehen sein, dass bei einer Antriebsbelastung durch die Brennkraftmaschine 44 unterschiedliche Drehrichtungen der Motorausgangswelle 78 bewirkt werden können.

Ebenso ist es möglich, dass die Drehrichtung der Motorausgangswelle 78 der in Fig. 2 dargestellten Drehrichtung 138 entgegengesetzt ist.

Wenn der Antriebsstrang 40 durch die Brennkraftmaschine 44 angetrieben wird und die Kupplungseinrichtung 46 geschlossen ist oder so geschlossen ist, dass sie nicht schlupft, wird bewirkt, dass die Getriebeeingangswelle 84 in der Drehrichtung belastet wird, die der Drehrichtung 138 entspricht. Dies ist durch den Pfeil 140 schematisch angedeutet.

Wenn eine der Vorwärtsgangstufen 94, 96, 98 oder 100 in den Kraftfluss geschaltet ist, dreht sich die Welle 142, auf der die Zahnräder 124, 128, 132, 136 und 118 angeordnet sind, in der der Drehrichtung der Motorausgangswelle 78 entgegengesetzten Richtung, wie durch den Pfeil 144 schematisch angedeutet ist.

Wenn die Rückwärtsgangstufe 102 in den Kraftfluss geschaltet ist, dreht sich die Welle 142 in der durch den Pfeil 146 angedeuteten Richtung, die der Drehrichtung 138 der Motorausgangswelle 78 entspricht. Dies ist darauf zurückzuführen, dass das zwischengeschaltete Zahnrad 120 bei der in Fig. 2 gezeigten Gestaltung an eine Drehrichtungsumkehr im Vergleich zu den Vorwärtsgängen bewirkt.

Zwischen vorbestimmten Antriebsstrangbauteilen ist im Antriebsstrang 40 ein Spiel gegeben.

Das jeweilige Spiel und/oder das Spiel an vorbestimmten Stellen des Antriebsstrangs 40 kann unter vorbestimmten Gegebenheiten mittels der in Fig. 2 gezeigten Vorrichtung geschlossen werden oder geschlossen gehalten werden.

Dies ist insbesondere dann möglich, wenn der Antriebsstrang 40 von seiner Abtriebsseite angetrieben wird. Eine solche Situation kann beispielsweise auftreten, wenn das Kraftfahrzeug bei betätigter Betriebsbremse 62, 64, 66, 68, 70, 72, 72, 74 und geöffneter Kupplungseinrichtung 46 am Hang steht und sich infolge der Hangabtriebskraft trotz betätigter Betriebsbremse 62, 64, 66, 68, 70, 72, 72, 74 das Kraftfahrzeug 42- insbesondere aus dem Stillstand - in Bewegung setzt.

Bei der in Fig. 2 gezeigten Gestaltung wird dieses Schließen des Spiels mittels des in der Speichereinrichtung 90 gespeicherten Steuerungsprogramms bewirkt.

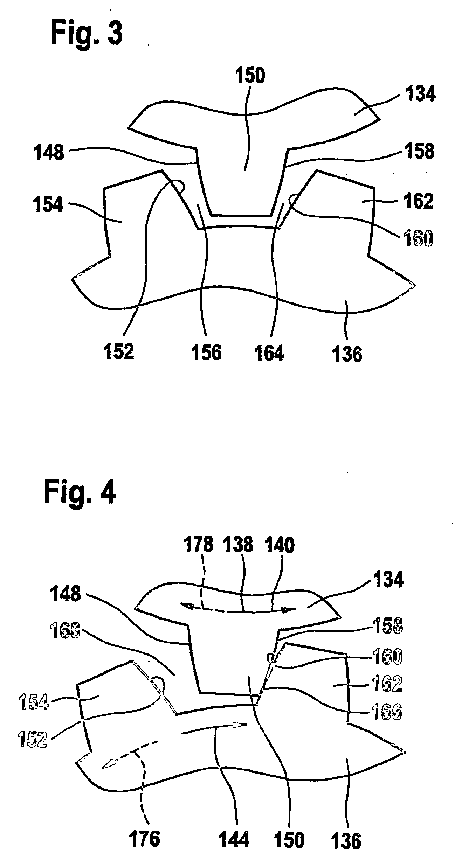

Das Schließen des Spiels soll nun mittels eines Beispiel anhand der Fig. 3 bis 5 näher erläutert werden: Bei diesem Beispiel ist Spiel an der Eingriffsstelle zwischen den Zahnrädern 134, 136 gegeben ist.

Die Fig. 3 bis 5 zeigen diese Eingriffsstelle aus Sicht der Linie A-A in Fig. 2 in schematischer Darstellung.

Bei folgenden Erläuterung wird angenommen, dass die in den Fig. 3 bis 5 gezeigte Getriebestufe in den Kraftfluss des Antriebsstrangs 40 geschaltet ist.

Bei folgenden Erläuterung wird insbesondere angenommen, dass die in den Fig. 3 bis 5 gezeigten Getriebestufe 100 in den Kraftfluss des Antriebsstrangs 40 geschaltet ist bzw. die Zahnräder 134 und 136 mit den Wellen, auf denen sie angeordnet sind, im wesentlichen drehfest gekoppelt sind. Ferner wird insbesondere angenommen, dass über die verbleibenden Getriebestufen 94, 96, 98 102 im wesentlichen aus dem Drehmomentfluss bzw. Kraftfluss geschaltet sind.

Die Fig. 3 bis 5 zeigen jeweils einen Ausschnitt der Zahnräder 134 und 136 im Bereich der Eingriffsstelle.

In der in Fig. 3 gezeigten Darstellung ist die Zahnflanke 148 des Zahnes 150 beabstandet zur Zahnflanke 152 des Zahnes 154 des Zahnrades 136, so dass ein Zwischenraum 156 gegeben ist. Ferner ist die Zahnflanke 158 des Zahnes 150 des Zahnrades 134 beabstandet zur Zahnflanke 160 des Zahnes 162 des Zahnrades 136, so dass auch in dieser Orientierung der Umfangsrichtung ein Zwischenraum 162 zwischen den Zähnen 134, 136 bzw. den Zahnflanken 158, 160 gegeben ist.

Im Bereich des Zwischenraums 156 sowie des Zwischenraums 162 ist ein (Teil)spiel zwischen den Zahnrädern 134 und 136 gegeben. Das (Teil)spiel im Bereich des Zwischenraums 156 sowie das (Teil)spiel im Bereich des Zwischenraums 162 ergänzen sich - in der in Fig. 3 gezeigten Gestaltung - zu einem (Gesamt)spiel zwischen den Zahnrädern 134 und 136. Grundsätzlich kann dies bei Zahnrädern auch anders gestaltet sein. So könnte beispielsweise ein (Teil)spiel in der einen Richtung durch ein erstes Zahnrad und ein (Teil)spiel durch ein zweites Zahnrad der gleichen Zahnradpaarung bestimmt sein, wobei diese (Teil)spiele in unterschiedlichen Orientierungen gegeben sind.

Wenn die Zahnräder 134 und 136 relativ zueinander verdreht werden, verringert sich das (Teil)spiel in einer Umfangsrichtung, während es in der entgegengesetzten Richtung sich vergrößert; die räumliche Anordnung bzw. Verteilung des Spiels zwischen den Zahnrädern 134 und 136 verlagert sich also.

Bei der in Fig. 4 gezeigten Relativanordnung der Zahnräder 134 und 136 ist im Bereich 166 im wesentlichen kein (Teil)spiel zwischen den Zahnrädern 134 und 136 gegeben, während im Bereich 168 (Teil)spiel zwischen diesen Zahnrädern 134, 136 gegeben ist, das hier im wesentlichen dem (Gesamt)spiel zwischen diesen Zahnrädern 134, 136 entspricht.

Die Zahnflanke 158 kontaktiert also in der Fig. 4 gezeigten Relativanordnung der Zahnräder 134 und 136 die Zahnflanke 160.

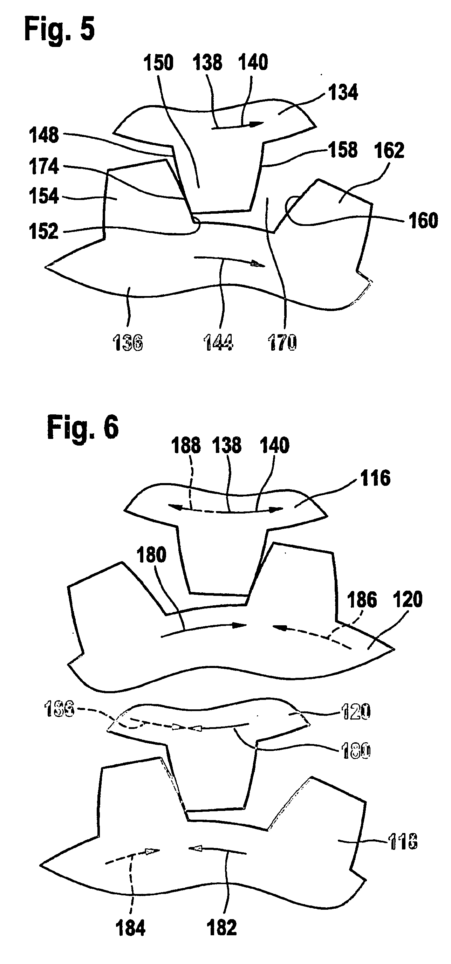

Bei der in Fig. 5 gezeigten Relativanordnung kontaktiert die Zahnflanke 148 die Zahnflanke 152, während im Bereich 170 (zwischen der Zahnflanke 158 und der Zahnflanke 160) ein (Teil)spiel gegeben ist, das im wesentlichen dem (Gesamt)spiel zwischen den Zahnrädern 134 und 136 entspricht.

In den Fig. 4 und 5 ist durch den Pfeil 140 die Drehrichtung angezeigt, der das Zahnrad 134 folgt, wenn die Brennkraftmaschine 44 bei geschlossener Kupplungseinrichtung 46 den Antriebsstrang 40 antreibt.

Wenn die Brennkraftmaschine 44 bei entsprechend geschlossener Kupplungseinrichtung 46 den Antriebsstrang 40 so belastet, dass das abtriebsseitige Antriebsstrangende mittels der Brennkraftmaschine 44 getrieben wird (und wenn die Last über die Gangstufe 100 übertragen wird), dreht sich das Zahnrad 134 der Belastung der Brennkraftmaschine 44 folgend in Richtung des Pfeils 138 bzw. 140 und belastet das Zahnrad 136 so, dass es sich in Richtung des Pfeils 144, also entgegengesetzt zur Richtung 138 bzw. 140, dreht. Hierbei befinden sich die Zahnräder 134, 136 in der in Fig. 4 gezeigten Stellung. In dieser Stellung ist, wie erwähnt, im Bereich 166 im wesentlichen kein (Teil)Spiel gegeben. Es ist also in der durch die Brennkraftmaschine 44 vorgegebene Lastrichtung zwischen den Zahnrädern 134 und 136 kein (Teil)spiel gegeben; es ist somit das Spiel zwischen den Zahnrädern 134. und 136 geschlossen. In der der durch die Brennkraftmaschine 44. vorgegebenen Lastrichtung entgegengesetzten Richtung ist zwischen den Zahnrädern 134 und 136 in der Relativanordnung gemäß Fig. 4 (Teil)spiel gegeben, wie im Bereich 168 verdeutlicht ist.

Wenn nun bei einer Gestaltung gemäß Fig. 2 - und die beispielhafte, erfindungsgemäße Ansteuerung der Kupplungseinrichtung 46 sei zunächst ausgeblendet - die Kupplungseinrichtung 46 geöffnet ist, kann es passieren, dass der abtriebsseitig der Kupplungseinrichtung 46 angeordnete Antriebsstrangabschnitt des Kraftfahrzeugs 42 von der Abtriebsseite angetrieben wird, und zwar insbesondere aus dem Stillstand. Eine solche Situation kann beispielsweise auftreten, wenn das Kraftfahrzeug 42 am Berg steht und sich infolge der Hangabtriebskraft gegebenenfalls bei betätigter Bremse - in Bewegung setzt.

Wenn die in den Fig. 3 bis 5 gezeigte Vorwärtsgangstufe 100 in der Getriebeeinrichtung 48 geschaltet ist und das Kraftfahrzeug 42 bzw. der genannte Antriebsstrangabschnitt von der Abtriebsseite in Vorwärtsfahrrichtung bewegt bzw. angetrieben wird, dreht sich das Zahnrad 136 wiederum in der durch den Pfeil 144 angezeigten Richtung. Da nun - im Verhältnis der Zahnräder 136 und 138 - das Zahnrad 136 das treibende und das Zahnrad 138 das getriebene ist, nehmen diese Zahnräder 136, 138 die in Fig. 5 gezeigt Relativstellung ein; die Zahnflanke 152 des Zahnrades 138 liegt dabei an der Zahnflanke 148 des Zahnrades 134 an, so das in diesem Bereich 174 im wesentlichen kein (Teil)spiel gegeben ist, während im Bereich 170 (Teil)spiel gegeben ist bzw. die Zahnflanken 158 und 160 beabstandet sind. Das Spiel ist in der in Fig. 5 gezeigten Darstellung (in der durch die Brennkraftmaschine 44 vorgegebenen Lastrichtung) zwischen den Zahnrädern 134 und 136 geöffnet.

Wenn nun anschließend die Kupplungseinrichtung 46 soweit geschlossen wird, dass die Brennkraftmaschine 44 den Antriebsstrang 40 aufgrund eines entsprechenden Fahrerwunsches und / oder im Kriechbetrieb so belastet, dass dieser bzw. das Kraftfahrzeug 42 von ihr angetrieben oder beschleunigt wird, schlägt das Spiel zwischen den Zahnrädern 134, 136 von "offen" auf "geschlossen" um, und zwar verhältnismäßig stark bzw. schnell. Dies kann mit einem Schlag verbunden sein. Beispielsweise bei einer Staufahrt am Berg kann dies auch mehrfach in geringer zeitlicher Abständen auftreten.

Gemäß einer beispielhaften erfindungsgemäßen Gestaltung gemäß Fig. 2 ist vorgesehen, dass - gegebenenfalls geknüpft an vorbestimmte Bedingungen - die Kupplungseinrichtung geringfügig so geschlossen wird, dass das Spiel abgebaut bzw. geschlossen wird, bevor sie soweit geschlossen wird, dass das übertragbare Drehmoment zum "Anfahren" oder "Fahren" gemäß einem Fahrerwunsch oder zum "Kriechen" ausreicht. Es wird also zunächst ein erstes Kupplungsmoment eingestellt, dass insbesondere so ist, dass es nicht ausreichen würde, um das Kraftfahrzeug 42 in der Ebene gegen die der Bewegung des Kraftfahrzeuges entgegengerichteten Widerstände in Bewegung zu setzen. Wenn das Spiel geschlossen ist, wie in der Relativstellung gemäß Fig. 4 gezeigt, wird die Kupplungseinrichtung 46 gemäß einer beispielhaften Gestaltung so geöffnet, dass sie kein Moment übertragen kann. Es kann auch vorgesehen sein, dass nach dem Schließen des Spiels die Kupplungseinrichtung 46 so angesteuert wird, dass dem Fahrerwunsch "Fahren" bzw. "Anfahren" gefolgt wird oder das Kraftfahrzeug 42 kriecht.

Es kann vorgesehen sein, dass das erste Kupplungsmoment nur erzeugt wird, wenn die Rollrichtung des Kraftfahrzeuges 42 der Rollrichtung entspricht, die der in der Getriebeeinrichtung 48 geschalteten Gangstufe entspricht. Wenn beispielsweise bei geschalteter Vorwärtsgangstufe 100 das Kraftfahrzeug 42 bei geöffneter Kupplungseinrichtung 46 von der Abtriebsseite angetrieben werden würde, würde sich das Zahnrad 136 entsprechend der durch den gestrichelten Pfeil 176 angezeigten Richtung drehen, also entgegen der Drehrichtung, die durch den Pfeil 144 in Fig. 4 angezeigt ist; da dieses Zahnrad 136 in dieser Gestaltung wiederum das Zahnrad 134 treiben würde, würde sich das Zahnrad 134 in der durch den gestrichelten Pfeil 178 angezeigten Drehrichtung drehen; es würde also wiederum die Zahnflanke 158 an der Zahnflanke 160 zur Anlage kommen bzw. anliegen, so dass das Spiel zwischen den Zahnrädern 134 und 136 geschlossen wäre. Wenn nun - bei dieser geschalteten Getriebestufe 100 - die Kupplungseinrichtung 46 zum "Anfahren" bzw. "Fahren" (gemäß Fahrerwunsch) geschlossen würde oder zum "Kriechen", wäre das Spiel bereits geschlossen, so dass es beim "Anfahren" bzw. "Fahren" bzw. "Kriechen" nicht zum Wechsel von "offenem" zu "geschlossenem" Spiel- käme.

Es kann auch vorgesehen sein, dass das erste Kupplungsmoment nur aufgebaut wird, wenn die Getriebeeingangswelle 84 langsamer dreht als die Motorausgangswelle 78 und gegebenenfalls weitere Bedingungen, wie z.B. "betätigte Bremseinrichtung 62, 64, 66, 68, 70" und "Gang in Getriebeeinrichtung 48 eingelegt" und "laufende Brennkraftmaschine 44", gegeben sind.

Fig. 6 zeigt beispielhaft ein geschlossenes Spiel für die Rückwärtsgangstufe 102. Gezeigt sind die Zahnräder 116, 120 und 118 der Rückwärtsgangstufe 102 aus Fig. 2.

Angedeutet durch die Pfeile 140, 180 und 182 sind ferner die Drehrichtungen dieser Zahnräder 116, 120 und 118 die der Rückwärtsgangstufe 102 zugeordnet sind bzw. die gegeben sind, wenn der Antriebsstrang 48 bei geschlossener Kupplungseinrichtung 46 von der Brennkraftmaschine 44 bei geschalteter Rückwärtsgangstufe 102 angetrieben wird.

Die in Fig. 6 gezeigte Relativstellung der Zahnräder 116, 120 und 118, bei der das jeweilige Spiel zwischen den Zahnrädern 116 und 120 bzw. 120 und 118 geschlossen ist, ist auch dann gegeben, wenn der abtriebsseitig der Kupplungseinrichtung 46 angeordnete Abschnitt des Antriebsstrangs 40 bei geöffneter Kupplungseinrichtung 46 von der Abtriebsseite angetrieben wird, wie anhand der gestrichelten Pfeile 184, 186 und 188 deutlich wird, die die Drehrichtungen der Zahnräder 116, 120 und 118 für diesen Fall andeuten.

## Patentansprüche

1. Verfahren zur Steuerung eines Antriebsstrangs eines Kraftfahrzeugs ,
- der eine Brennkraftmaschine mit einer Motorausgangswelle aufweist, die den Antriebsstrang belasten kann;
- in dem eine Getriebeeinrichtung vorgesehen ist, in welcher unterschiedliche Übersetzungen geschaltet werden können;
- in dem eine Anfahrkupplung vorgesehen ist, die zwischen der Brennkraftmaschine und der Getriebeeinrichtung angeordnet ist;
- in dem zwischen der Kupplungseinrichtung und der Getriebeeinrichtung eine Getriebeeingangswelle vorgesehen ist, die sich zur Getriebeeinrichtung erstreckt; und
- in dem mehrere Antriebsstrangbauteile mit Spiel gekoppelt sind;
wobei
- der Antriebsstrang unter vorbestimmten Gegebenheiten in einem ersten Betriebsmodus, dem Normal-Lastbetrieb, betrieben wird, in dem die Brennkraftmaschine das Kraftfahrzeug gegen die einer Bewegung des Kraftfahrzeugs entgegengerichteten Widerstände bewegt, wobei das Spiel in der durch die Drehrichtung der Motorausgangswelle vorgegebenen Lastrichtung geschlossen ist;
- der Antriebsstrang außerhalb dieses Normal-Lastbetriebs unter vorbestimmten Gegebenheiten in einem zweiten Betriebsmodus betrieben wird, in dem in einen Antriebsstrangabschnitt eine erste Last eingeleitet wird, die bewirkt, dass das Spiel abtriebsseitig dieser Lasteinleitungsstelle geschlossen wird oder geschlossen bleibt, wobei diese erste Last derart ist, dass sie zur Überwindung der der Bewegung des Kraftfahrzeuges in der Ebene entgegengesetzten Widerstände nicht ausreichen würde und
- ein Startergenerator, den Antriebsstrang unter vorbestimmten Gegebenheiten belastet, und zwar so, dass das Spiel im Antriebsstrang abtriebsseitig dieser Lasteinleitungsstelle geschlossen wird oder geschlossen bleibt.

2. Verfahren nach Anspruch 1, **dadurch gekennzeichnet, dass** die erste Last im wesentlichen so lange derart gering gehalten wird, dass sie zur Überwindung der der Bewegung des Kraftfahrzeuges in der Ebene entgegengesetzten Widerstände nicht ausreichen würde, solange das Spiel noch zumindest teilweise geöffnet ist.

3. Verfahren nach einem der vorangehenden Ansprüche, **dadurch gekennzeichnet, dass** die erste Last auf einen vorbestimmten Wert rampenförmig aufgebaut wird.

4. Verfahren nach einem der vorangehenden Ansprüche, **dadurch gekennzeichnet, dass** die Kupplungseinrichtung so angesteuert wird, dass sie außerhalb des zweiten Betriebsmodus geöffnet ist oder geöffnet wird, wenn das Kraftfahrzeug im Stillstand ist, ein Gang in der Getriebeeinrichtung eingelegt ist und eine Bremseeinrichtung des Kraftfahrzeuges betätigt ist.

5. Verfahren nach einem der vorangehenden Ansprüche, **dadurch gekennzeichnet, dass** die Neigung des Kraftfahrzeuges gegenüber dem Untergrund qualitativ und /oder quantitativ ermittelt wird.

6. Verfahren nach einem der vorangehenden Ansprüche, **dadurch gekennzeichnet, dass** ermittelt wird, ob die Getriebeeingangswelle mit einer Drehzahl rotiert, die - gegebenenfalls und Berücksichtigung von Übersetzungen - geringer als die Motordrehzahl ist, wobei ermittelt wird, ob die Getriebeeingangswelle von der Abtriebsseite angetrieben wird.

7. Verfahren nach einem der vorangehenden Ansprüche, **dadurch gekennzeichnet, dass** eine Bremseinrichtung zum Bremsen des Kraftfahrzeuges vorgesehen ist und ein Bremslichtsignal erzeugt wird, wenn die Bremseinrichtung zumindest teilweise betätigt ist.

8. Verfahren nach einem der vorangehenden Ansprüche, **dadurch gekennzeichnet, dass** der Antriebsstrang unter vorbestimmten Gegebenheiten im zweiten Betriebsmodus Betriebsmodus betrieben wird und / oder in diesen geschaltet wird, wenn ermittelt wurde, dass die Getriebeeingangswelle bei in der Getriebeeinrichtung eingelegtem Gang sowie bei laufender Brennkraftmaschine und bei betätigter Bremseinrichtung und / oder, wenn wenigstens ein Bremssignal erzeugt wird, mit einer Drehzahl rotiert, die - gegebenenfalls und Berücksichtigung von Übersetzungen - geringer ist als die Motordrehzahl ist, wobei insbesondere gefordert werden kann, dass die Getriebeeingangswelle von der Abtriebsseite angetrieben wird.

9. Verfahren nach einem der vorangehenden Ansprüche, **dadurch gekennzeichnet, dass** die Rollrichtung des Kraftfahrzeuges ermittelt wird.

10. Verfahren nach Anspruch 9, **dadurch gekennzeichnet, dass** der Antriebsstrang nur dann im zweiten Betriebsmodus betrieben wird, wenn ermittelt wurde, dass die Rollrichtung des Kraftfahrzeuges der Rollrichtung entspricht, die dem aktuell in der Getriebeeinrichtung eingelegten Gang zugeordnet ist.

11. Verfahren nach einem der vorangehenden Ansprüche, **dadurch gekennzeichnet, dass** der Gradient des Bremsdrucks und / oder der Bremsdruck der Bremseinrichtung des Kraftfahrzeuges ermittelt wird.

12. Verfahren nach Anspruch 12, **dadurch gekennzeichnet, dass** der Antriebsstrang in den zweiten Betriebsmodus geschaltet wird, wenn festgestellt wird, dass der Gradient des Bremsdrucks eine vorbestimmte Schwelle überschreitet und / oder der Bremsdruck eine vorbestimmte Schwelle unterschreitet.

13. Antriebsstrang für ein Kraftfahrzeug
- der eine Brennkraftmaschine mit einer Motorausgangswelle aufweist, die den Antriebsstrang belasten kann;
- in dem eine Getriebeeinrichtung vorgesehen ist, in welcher unterschiedliche Übersetzungen geschaltet werden können;
- in dem eine Anfahrkupplung vorgesehen ist, die zwischen der Brennkraftmaschine und der Getriebeeinrichtung angeordnet ist;
- in dem zwischen der Kupplungseinrichtung und der Getriebeeinrichtung eine Getriebeeingangswelle vorgesehen ist, die sich zur Getriebeeinrichtung erstreckt; und
- in dem mehrere Antriebsstrangbauteile mit Spiel gekoppelt sind;
- ein Startergenerator, der den Antriebsstrang unter vorbestimmten Gegebenheiten belastet, und zwar so, dass das Spiel im Antriebsstrang abtriebsseitig dieser Lasteinleitungsstelle geschlossen wird oder geschlossen bleibt.
zur Durchführung des Verfahrens gemäß der Ansprüche 1 bis 12.

## Claims

1. Method for controlling a drive train of a motor vehicle,
- which has a combustion engine with an engine output shaft that can place a load on the power train,
- in which a transmission device is provided in which different transmission ratios can be selected,
- in which a start-up clutch is provided which is situated between the combustion engine and the transmission device,
- in which a transmission input shaft is provided between the clutch device and the transmission device, which extends to the transmission device, and
- in which a plurality of power train components are coupled with free play,
where
- the power train is operated under predetermined circumstances in a first operating mode, normal operation under load, in which the combustion engine moves the motor vehicle against the resistances that are directed against a motion of the motor vehicle, the play being closed in the load direction prescribed by the direction of rotation of the engine output shaft,
- outside of this normal operation under load the power train is operated under predefined circumstances in a second operating mode, in which a first load is introduced into a section of the power train, which causes the play to become closed or remain closed on the take-off side of this load introduction point, this first load being such that it would not be sufficient to overcome the resistances opposing the motion of the motor vehicle on the flat, and
- a starter generator subjects the power train to loading under predetermined circumstances, in such a way that the play in the drive train on the take-off side of this load introduction point is closed or remains closed.

2. Method according to Claim 1, **characterized in that** the first load is kept low enough for essentially long enough so that it would not be sufficient to overcome the resistances opposing the motion of the motor vehicle on the level, as long as the play is still at least partially open.

3. Method according to one of the preceding claims, **characterized in that** the first load is built up in a ramp pattern to a predefined value.

4. Method according to one of the preceding claims, **characterized in that** the clutch device is activated in such a way that it is open or becomes open outside of the second operating mode if the motor vehicle is standing still, a gear is engaged in the transmission device and a brake device of the motor vehicle is activated.

5. Method according to one of the preceding claims, **characterized in that** the inclination of the motor vehicle compared to the ground is ascertained qualitatively and/or quantitatively.

6. Method according to one of the preceding claims, **characterized in that** it is ascertained whether the transmission input shaft is rotating at a speed which - allowing for gearing as appropriate - is lower than the engine speed, it being ascertained whether the transmission input shaft is driven from the take-off side.

7. Method according to one of the preceding claims, **characterized in that** a brake device is provided to brake the motor vehicle, and a brake light signal is produced when the brake device is at least partially activated.

8. Method according to one of the preceding claims, **characterized in that** the power train is operated under predefined conditions in the second operating mode and/or is shifted into it when it is ascertained that with a gear engaged in the transmission device and with the combustion engine running and with the brake device activated and/or if at least one brake signal is being generated, the transmission input shaft is rotating at a speed which - allowing for gearing if applicable - is lower than the engine speed, where it can be required in particular that the transmission input shaft be driven from the take-off side.

9. Method according to one of the preceding claims, **characterized in that** the rolling direction of the motor vehicle is ascertained.

10. Method according to Claim 9, **characterized in that** the power train is operated in the second operating mode only when it has been ascertained that the rolling direction of the motor vehicle corresponds to the rolling direction that is assigned to the gear currently engaged in the transmission device.

11. Method according to one of the preceding claims, **characterized in that** the gradient of the brake pressure and/or the brake pressure of the brake device of the motor vehicle is ascertained.

12. Method according to Claim 11, **characterized in that** the power train is shifted into the second operating mode if it is determined that the gradient of the brake pressure exceeds a predefined threshold and/or the brake pressure is below a predefined threshold.

13. Power train for a motor vehicle,
- which has a combustion engine with an engine output shaft that can place a load on the power train,
- in which a transmission device is provided in which different transmission ratios can be selected,
- in which a start-up clutch is provided which is situated between the combustion engine and the transmission device,
- in which a transmission input shaft is provided between the clutch device and the transmission device, which extends to the transmission device, and
- in which a plurality of power train components are coupled with free play,
- a starter generator subjects the power train to loading under predetermined circumstances, in such a way that the play in the drive train on the take-off side of this load introduction point is closed or remains closed,
for carrying out the method according to Claims 1 through 12.

## Revendications

1. Procédé de commande d'une chaîne cinématique d'un véhicule automobile,
- qui présente un moteur à combustion interne comprenant un arbre de sortie du moteur, moteur à combustion interne qui peut solliciter la chaîne cinématique ;
- dans laquelle il est prévu une boîte de vitesses dans laquelle peuvent être passés différents rapports de transmission ;
- dans laquelle il est prévu un embrayage de démarrage qui est disposé entre le moteur à combustion interne et la boîte de vitesses ;
- dans laquelle il est prévu, entre le dispositif d'embrayage et la boîte de vitesses, un arbre d'entrée de la boîte de vitesses qui s'étend jusqu'à la boîte de vitesses ; et
- dans laquelle plusieurs composants de la chaîne cinématique sont accouplés avec du jeu ;
où
- la chaîne cinématique, suivant des données prédéfinies, est commandée dans un premier mode de fonctionnement, à savoir le fonctionnement à charge normale, dans lequel le moteur à combustion interne déplace le véhicule automobile en agissant contre les résistances opposées à un déplacement du véhicule automobile, où le jeu dans la direction de charge prédéfinie par le sens de rotation de l'arbre de sortie du moteur est fermé ;
- la chaîne cinématique, en dehors de ce fonctionnement à charge normale, est commandée, suivant des données prédéfinies, dans un deuxième mode de fonctionnement dans lequel une première charge est introduite dans une partie de la chaîne cinématique, charge qui a pour effet que le jeu, côté sortie de ce point d'introduction de charge, est fermé ou reste fermé, où cette première charge est telle, qu'elle ne sera pas suffisante pour surmonter les résistances opposées au déplacement du véhicule sur le plat, et
- un alternateur de démarreur sollicite la chaîne cinématique, suivant des données prédéfinies, et ce, de manière telle que le jeu, dans la chaîne cinématique, soit fermé ou reste fermé, côté sortie de ce point d'introduction de charge.

2. Procédé selon la revendication 1, **caractérisé en ce que** la première charge est maintenue pratiquement aussi longtemps à un niveau si faible, qu'elle ne suffira pas à surmonter les résistances opposées au déplacement du véhicule automobile, sur le plat, aussi longtemps que le jeu est encore au moins partiellement ouvert.

3. Procédé selon l'une ou l'autre des revendications précédentes, **caractérisé en ce que** la première charge est augmentée, en forme de rampe, pour atteindre une valeur prédéfinie.

4. Procédé selon l'une quelconque des revendications précédentes, **caractérisé en ce que** le dispositif d'embrayage est piloté de manière telle, qu'il soit ouvert ou qu'il s'ouvre en dehors du deuxième mode de fonctionnement, lorsque le véhicule automobile est à l'arrêt, qu'un rapport est engagé dans la boîte de vitesses et qu'un dispositif de freinage du véhicule automobile est actionné.

5. Procédé selon l'une quelconque des revendications précédentes, **caractérisé en ce que** l'inclinaison du véhicule automobile, par rapport au sol, est déterminée qualitativement et / ou quantitativement.

6. Procédé selon l'une quelconque des revendications précédentes, **caractérisé en ce que** l'on détermine le fait de savoir si l'arbre d'entrée de la boîte de vitesses tourne à une vitesse de rotation qui, le cas échéant et en tenant compte de rapports de transmission, est inférieure à la vitesse de rotation du moteur, où l'on détermine le fait de savoir si l'arbre d'entrée de la boîte de vitesses est entraîné par le côté sortie.

7. Procédé selon l'une quelconque des revendications précédentes, **caractérisé en ce qu'**il est prévu un dispositif de freinage pour le freinage du véhicule automobile, et un signal de feux de stop est produit lorsque le dispositif de freinage est actionné au moins partiellement.

8. Procédé selon l'une quelconque des revendications précédentes, **caractérisé en ce que** la chaîne cinématique, suivant des données prédéfinies, est commandée dans le deuxième mode de fonctionnement et / ou passe dans ce mode de fonctionnement, lorsqu'il a été déterminé, un rapport étant engagé dans la boîte de vitesses, le moteur à combustion interne étant en marche et le dispositif de freinage étant activé, et / ou lorsqu'au moins un signal de freinage est produit, que l'arbre d'entrée de la boîte de vitesses tourne à une vitesse de rotation qui, le cas échéant et en tenant compte de rapports de transmission, est inférieure à la vitesse de rotation du moteur, où l'on peut demander, en particulier, que l'arbre d'entrée de la boîte de vitesses soit entraîné par le côté sortie.

9. Procédé selon l'une quelconque des revendications précédentes, **caractérisé en ce que** l'on détermine le sens de roulage du véhicule automobile.

10. Procédé selon la revendication 9, **caractérisé en ce que** la chaîne cinématique est commandée dans le deuxième mode de fonctionnement, seulement lorsque l'on a déterminé que le sens de roulage du véhicule automobile correspond au sens de roulage qui est associé au rapport engagé réellement dans la boîte de vitesses.

11. Procédé selon l'une quelconque des revendications précédentes, **caractérisé en ce que** l'on détermine le gradient de la pression de freinage et / ou la pression de freinage du dispositif de freinage du véhicule automobile.

12. Procédé selon la revendication 11, **caractérisé en ce que** la chaîne cinématique passe dans le deuxième mode de fonctionnement, lorsque l'on constate que le gradient de la pression de freinage dépasse la limite supérieure d'un seuil prédéfini et / ou que la pression de freinage dépasse la limite inférieure d'un seuil prédéfini.

13. Chaîne cinématique pour un véhicule automobile,
- qui présente un moteur à combustion interne comprenant un arbre de sortie du moteur, moteur à combustion interne qui peut solliciter la chaîne cinématique ;
- dans laquelle il est prévu une boîte de vitesses dans laquelle peuvent être passés différents rapports de transmission ;
- dans laquelle il est prévu un embrayage de démarrage qui est disposé entre le moteur à combustion interne et la boîte de vitesses ;
- dans laquelle il est prévu, entre le dispositif d'embrayage et la boîte de vitesses, un arbre d'entrée de la boîte de vitesses qui s'étend jusqu'à la boîte de vitesses ; et
- dans laquelle plusieurs composants de la chaîne cinématique sont accouplés avec du jeu ;
- où un alternateur de démarreur sollicite la chaîne cinématique suivant des données prédéfinies, et ce, de manière telle que le jeu dans la chaîne cinématique soit fermé ou reste fermé, côté sortie de ce point d'introduction de charge,
servant à la mise en oeuvre du procédé selon l'une des revendications 1 à 12.
